# EUROPEAN PATENT APPLICATION

(11) **EP 2 913 309 A1**
(43) Date of publication of application: **02.09.2015**
(21) Application number: 15157237.7
(22) Date of filing: 02.03.2015
(51) Int. Cl.: C02F 3/10, C02F 3/18

(54) **CONTAINER WITH FILTER**

(30) Priority: 28.02.2014 TH 1401001102
(71) Applicant: Towiwat, Dhiti, Bangkok 10900 (TH)
(72) Inventor: Towiwat, Dhiti, Bangkok 10900 (TH)
(74) Representative: Intès, Didier Gérard André

(57) **Abstract**

The invention relates to a container (2) having filter for water treatment tank. The container comprises a wall made of impermeable material (2), a wastewater treatment material (4) contained inside the wall of the container, an axis tube installed within the wastewater treatment material (5), an outlet tube attaching to the axis tube (6), a covering sheet for covering the opening of the container having filter (7), wherein the wastewater treatment material is in the form of a flexible sheet and bendable for installing around the axis tube.

## Description

### Field of Invention

Engineering in the filed related to container having media for water treatment

### Background of the invention

The present ready-to-use Wastewater treatment tanks and containers available in Asean normally utilize waste water treatment system that has a media used for treatment, either in the anaerobic process or aerobic process. This media being a filter is contained in the designed part or room and there is an approach in directing the flow of wastewater to contact with the said media.

This room having filters could have partitioning wall or be in the form of a container. Both forms have certain limitations, particularly, when sending the components for assembly in other regions such as at the domestic or international branches. More specifically, the use of partitioning wall will require the adhesion of the partition with the internal tank wall. This step of the manufacturing process is difficult in the locations other than the location that has been previously prepared or adjusted for supporting such process. With regard to the use of container which has a specific physical shape, the issue is the area required for transportation which will increase according to the volume of the container. Considering that there is a continuing expansion of the business and growth of the industry to other countries in the region according to the AEC framework, the goods, the manufacture and the delivery of such goods becomes more important and the prior approaches which led to the limitations as aforementioned need to be improved. The inventor therefore invented this invention in view of these problems.

### Summary of the invention

This invention focuses on the improvement of the central container of the wastewater tank so that there is an increase in terms of the ease and also the reduction in the cost of transportation. The manufacturing process at the locations at the domestic and international branches outside the specifically allocated location can be done under the same conditions and therefore lead to the goods that have the same quality and standard. This invention also improves the performance in term of the wastewater treatment and the central container can be applied and installed with various shapes of the wastewater treatment tanks. According to this invention, the container having filter comprises wall of the container having filter that is made of impermeable material wastewater treatment material contained inside the wall of the container having filter axis tube installed within the wastewater treatment material the outlet tube attaching to the axis tube covering sheet for covering the opening of the container having filter wherein the wastewater treatment material is in the form of a flexible sheet and bendable for installing around the axis tube.

The said container having filter utilizes an impermeable wastewater treatment material as a media for bacteria to attach and form a colloid between agap of the surface of the impermeable wastewater treatment material. The said material is in the form of a flat sheet or in the form of waved pattern sheet and can be arranged as a net, a geometrical shape or random shape positioned around the axis tube. Additionally, the wall of the container having filter that is made of impermeable material in the form of a sheet can be rolled so that the rolled sheet can form a wall of the container having filter that has a cylindrical shape. This can further comprises the outlets and a channel on one end in which the other end can be inserted into the said channel when the sheet is bended in order to form a single cylindrical shaped container.

In the other aspect of this invention, covering sheet for covering the opening of the container having filter comprises upper covering sheet and lower covering sheet for covering both openings of the cylindrical containers having filer. Each of such openings have the hole for insetting the axis tube through the said hole.

The invention relates to a container (2) having filter for water treatment tank. The improvement reduces the volume of transportation to around 35 and 50 times for the media container and the manufacture of the container respectively. The reduction does not affect the standard for manufacturing process and such process can be easily done at the domestic and international branches. The invention does not reduce the treatment performance and also increase the surface used for treatment of approximately 5 times (10.2 square meters to 52.09 square meters, based on the examples of the 1600-liter container)

For a better understanding of the preferred embodiment and to show how it may be performed, it will now be described in more detail by way of example only, with reference to the accompanying drawings.

### Brief descriptions of the drawings

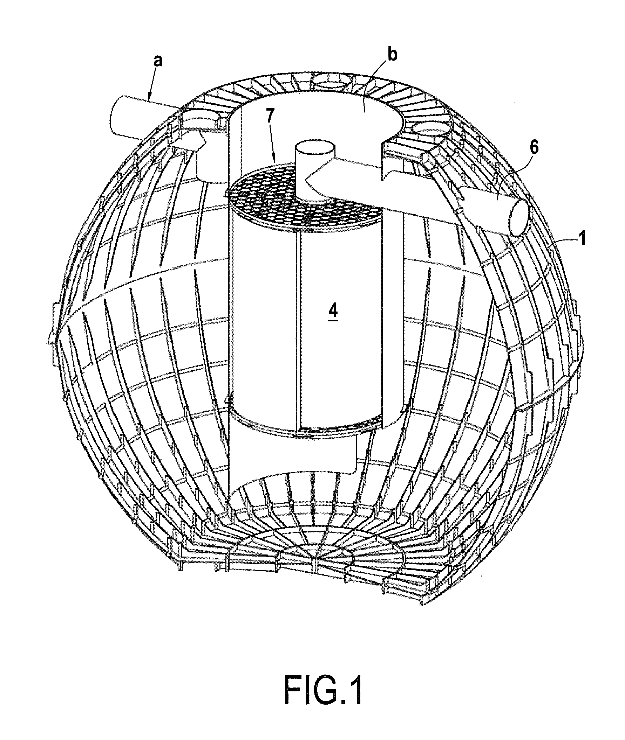

Figure 1 shows the assembled components;

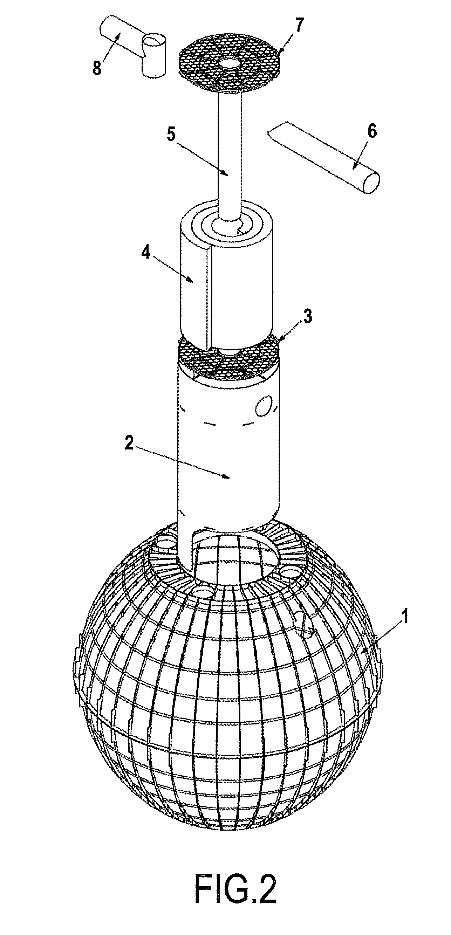

Figure 2 shows the components to be assembled as media container for water treatment tank;

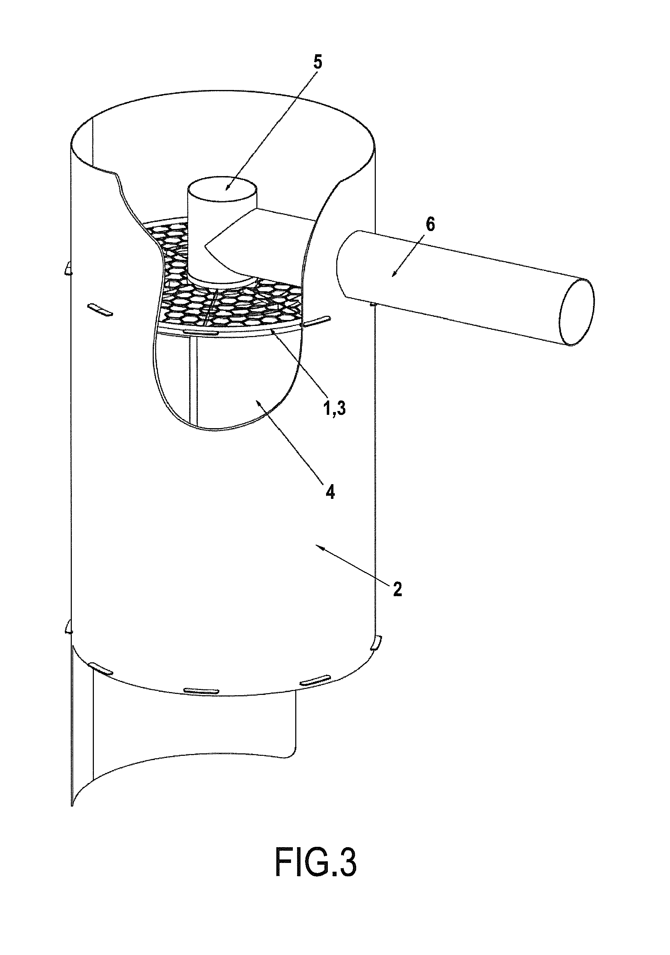

Figure 3 shows media container for water treatment when assembled;

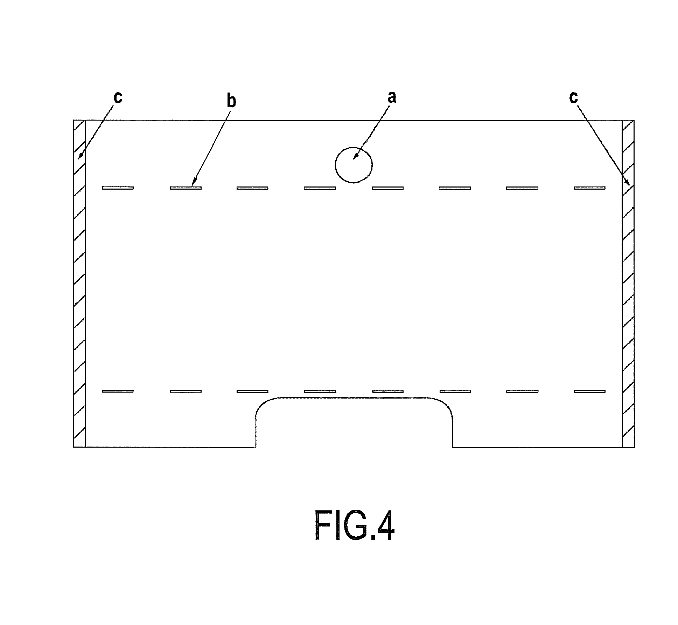

Figure 4 shows the plastic media for water treatment;

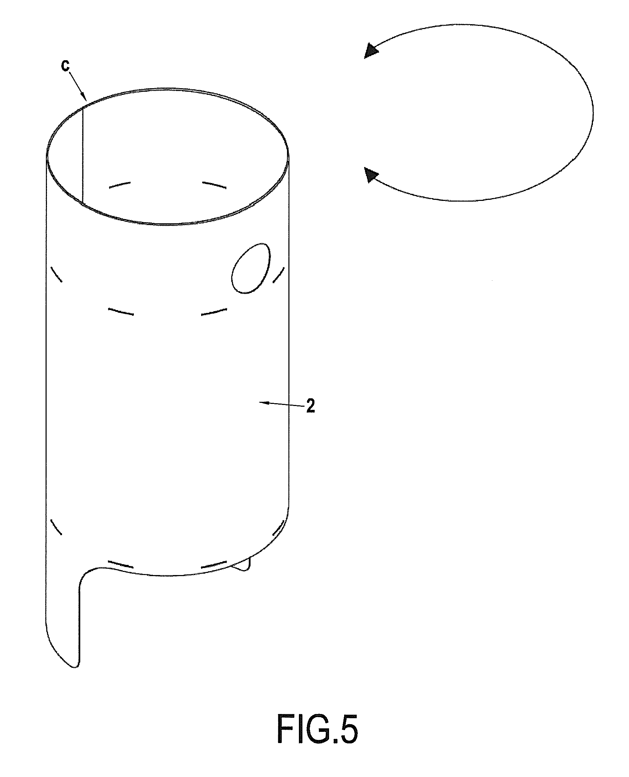

Figure 5 shows the rolling of the wall into the cylindrical shape;
Figure 6 shows the flow and circulation of water;
Figures 7A and 7B show examples of sections of sheets for forming the plastic media.

### Detailed Description of the preferred embodiments

This invention according to the objectives of the invention is the media containers for the water treatment tank having the details as follows:

Wall of the container having filer (2) is manufactured from the impermeable sheet comprising a hole (a) for water outlet (8) and a channel (b) for installing a closing means (3) or supporting means (7). This sheet maintains the shape of a sheet during the transportation. Hence, there is a reduction of the volume needed for transportation (in case that the prior volume is 197 liters, it will be reduced to 4.4 liters-the volume is reduced almost 30 times). When it is to be used, the sheet will be rolled as shown in the figure in which the shaded area (c) will be arranged to be overlapped and adhered together forming a cylindrical shape (2).

Closing means (3) /supporting means (7): the media is designed in the way that the water can pass through without effecting the position of the said media. The rim of the closing means comprise the means for fastening with the channel (b) of the wall of the container having filter and the central area around the center of this closing means is designed to have the axis tube and the connected sediment pumping tube (5) passed through.

Axis tube for supporting the installation and connection of the sediment pumping tube (5) is a tube larger than the regular tube used in the urban area. The lower end passes through the closing means (3) and the upper end passes through the closing means (7). This axis tube, apart for supporting the installation and connection of the sediment pumping tube, also strengthen the overall embodiment.

The plastic media (4) is the media which acts as a holding or attaching means for bacteria to stay on the surface and is a colloid between the surface gaps. The bacteria will decompose the dirt and foreign matter in the wastewater. This plastic media is normally provided in various forms and structures. However, there is an issue of the volume required for transportation. The inventor therefore invented the plastic media which is a Cross Flow Media by rolling the media around the axis tube (5) until it fills the internal space of the container (2). The rolling increases the surface used for treatment (calculated from prior media pall ring) from the previous 100 liters corresponding to the area of 10.2 square meters to 52.09 square meters (based on the examples of the 1600-liter container). Hence, the treatment performance is increased.

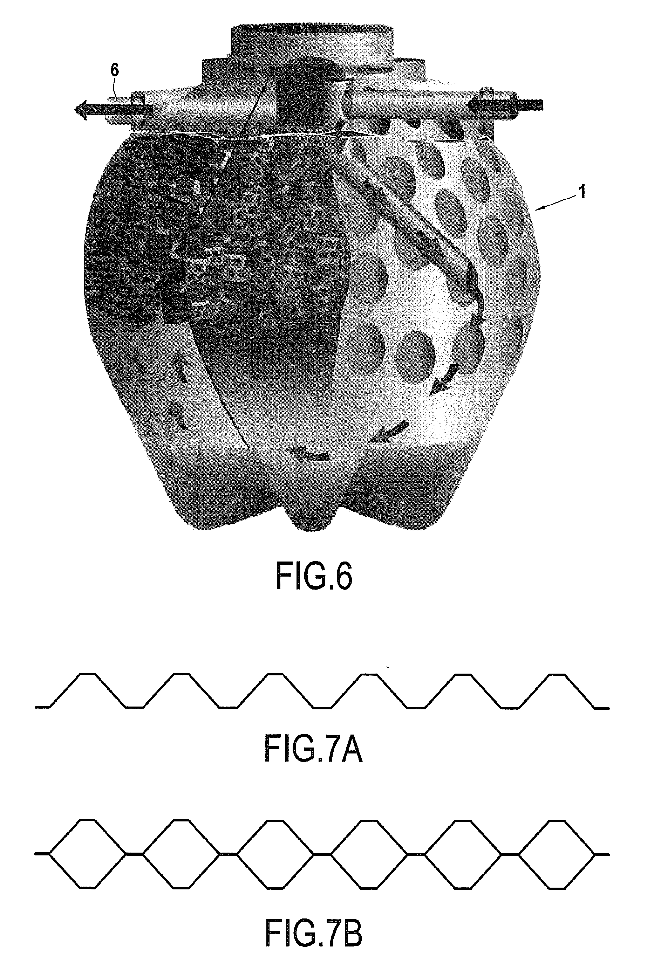

Additionally, as shown in Figure 6A, the plastic media may be designed to be semi-ready to use and may be in the form of a waved pattern sheet, for ease of the transportation. Figure 6A shows a single sheet. As shown in Figure 6B, when assembling multiple sheets for forming a composited sheet of plastic media, the top parts of the triangles formed by the waved pattern will be organized and positioned together against each other as one piece (as shown in the figure below). The volume of transportation is reduced approximately 50 times compared to the regular load of transportation.

The water outlet (6) is the outlet tube having one end connected to the axis tube (5) and the other end positioned outside the tank. The area close to the axis tube may comprise a hole for receiving water from the media and draining the same outside the tank as shown in the figure B.

It will be appreciated by persons skilled in the art that the present invention is not limited by what has been particularly shown and described hereinabove. Rather the scope of the present invention includes both combinations and sub-combinations of the features described hereinabove as well as modifications and variations thereof which would occur to a person of skill in the art upon reading the foregoing description and which are not in the prior art.

## Claims

1. A container having filter (2) comprising
A wall made of impermeable material (2)
A wastewater treatment material (4) contained inside the wall of the container An axis tube installed within the wastewater treatment material (5)
An outlet tube attaching to the axis tube (6)
A covering sheet for covering the opening of the container having filter (7)
wherein the wastewater treatment material is in the form of a flexible sheet and bendable for installing around the axis tube.

2. A container having filter according to claim 1 wherein the said container having filter has an impermeable wastewater treatment material as a media for bacteria to attach and form a colloid between a gap of the surface of the impermeable wastewater treatment material.

3. A container having filter according to claim 1 or 2 wherein the impermeable wastewater treatment material is in the form of a waved pattern sheet.

4. A container having filter according to claim 1, 2 or 3 wherein the impermeable wastewater treatment material is positioned around the axis tube.

5. A container having filter according to claim 1 wherein the wall of the container having filter is made of impermeable material in the form of a sheet and is rolled thereby forming a wall of the cylindrical shaped container having filter.

6. A container having filter according to claim 3 wherein thewall of the container having filter comprises the outlets (6) and a channel at one end in which the other end can be inserted into the said channel.

7. A container having filter according to claim 3 or 4 wherein the covering sheet for covering the opening of the container having filter comprises upper covering sheet (7) and lower covering sheet (3) for covering both openings of the cylindrical containers having filer, each of such openings having a hole for inserting the axis tube through the said hole.
